(19) Europäisches Patentamt
European Patent Office
Office européen des brevets

(11) Veröffentlichungsnummer : **0 356 660 B1**

# (12) EUROPÄISCHE PATENTSCHRIFT

(45) Veröffentlichungstag der Patentschrift :
**20.01.93 Patentblatt 93/03**

(51) Int. Cl.$^5$ : **C08G 75/23,** C08G 65/40

(21) Anmeldenummer : **89112506.4**

(22) Anmeldetag : **08.07.89**

## (54) Neue aromatische Polyethersulfone, Verfahren zu ihrer Herstellung und ihre Verwendung.

(30) Priorität : **23.07.88 DE 3825148**

(43) Veröffentlichungstag der Anmeldung :
**07.03.90 Patentblatt 90/10**

(45) Bekanntmachung des Hinweises auf die Patenterteilung :
**20.01.93 Patentblatt 93/03**

(84) Benannte Vertragsstaaten :
**DE FR GB IT**

(56) Entgegenhaltungen :
**EP-A- 0 201 831**
**EP-A- 0 243 833**
**GB-A- 1 122 192**
**PATENT ABSTRACTS OF JAPAN, Band 109, Nr. 24, 12 Dezember 1988**

(73) Patentinhaber : **BAYER AG**
**W-5090 Leverkusen 1 Bayerwerk (DE)**

(72) Erfinder : **Genz, Joachim, Dr.**
**Bodelschwinghstrasse 16**
**W-4150 Krefeld 1 (DE)**
Erfinder : **Dicke, Hans-Rudolf, Dr.**
**Baumhofstrasse 28**
**W-5780 Bestwig (DE)**

**EP 0 356 660 B1**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft aromatische Polyethersulfone mit neuartigen Strukturmerkmalen, ein Verfahren zu ihrer Herstellung und ihre Verwendung.

Die neuen aromatischen Polyethersulfone enthalten als Strukturbaustein 2′, 2″-Dihydroxy-m-quaterphenyl der Formel (I)

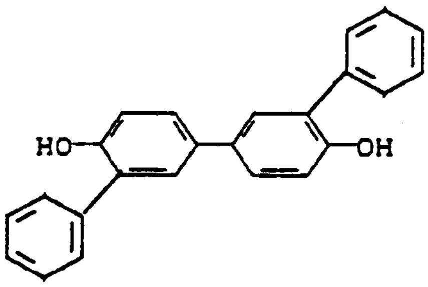

(I).

Sie haben ein hohes Molekulargewicht und besonders hohe Temperaturbeständigkeit, gute Verarbeitbarkeit sowie gute mechanische Eigenschaften.

Aromatische Polyethersulfone können hergestellt werden, z.B. durch Umsetzung von 4,4′-Disulfonylchlorid-diphenylether mit Biphenyl, von 4-Monosulfonylchoriddiphenylether mit sich selbst oder mit 4-Monosulfonylchloridbiphenyl (z.B. GB-PS 1 016 245, GB-PS 1 106 366, GB-PS 1 106 367, GB-PS 1 122 192).

Die bekannten Polyethersulfone besitzen hohe Wärmeformbeständigkeiten, sind jedoch wegen ihrer hohen Schmelzenviskositäten schwierig zu verarbeiten

Es wurde nun gefunden, daß Polyethersulfone, die als Strukturmerkmale 2′,2″-Dihydroxy-m-quaterphenyl der Formel (I) eingebaut enthalten, hohe Wärmeformbeständigkeiten besitzen. Sie haben auch bei hohen Molekulargewichten niedrige Schmelzindices und sind leicht verarbeitbar.

Gegenstand der Erfindung sind daher aromatische Polyethersulfone mit hohem Molekulargewicht, dadurch gekennzeichnet, daß sie 2′,2″-Dihydroxy-m-quaterphenyl in einer Konzentration von 1 bis 100 Mol-%, bezogen auf die Gesamtmenge (in Mol) eingesetzter Bisphenol-Komponente, eingebaut enthalten.

Gegenstand der Erfindung sind hochmolekulare, aromatische Polyethersulfone, hergestellt aus 2′,2″-Dihydroxy-m-quaterphenyl und gegebenenfalls einer weiteren oder mehrerer weiterer aromatischer Dihydroxy-Komponenten und wenigstens einer aromatischen Dihalogenverbindung, welche eine Sulfon-Gruppe enthält, unter Verwendung einer Alkali-Verbindung, in Gegenwart eines inerten, polaren, organischen Lösemittels.

Polykondensationsreaktionen zu den erfindungsgemäßen Polyethersulfonen können beispielsweise durchgeführt werden, indem entsprechende Mengen 2′,2″-Dihydroxy-m-quaterphenyl und gegebenenfalls einer weiteren aromatischen Dihydroxy-Verbindung mit freien Hydroxyl-Gruppen, mit einer aromatischen Dihalogen-Sulfonverbindung in einem inerten, polaren, organischen Lösemittel, vorzugsweise in einem N-alkyliertem Caprolactam, in Gegenwart einer Alkaliverbindung umgesetzt werden oder indem die Alkalisalze des 2′,2″-Dihydroxy-m-quaterphenyls sowie gegebenenfalls einer weiteren aromatischen Dihydroxyverbindungen mit aromatischen Dihalogen-Sulfonverbindungen in einem inerten, hochpolaren, organischen Lösemittel, vorzugsweise in einem N-alkylierten Caprolactam, umgesetzt werden.

Für die Umsetzung in dipolar aprotischen Lösemitteln können gemeinsam mit 2′,2″-Dihydroxy-m-quaterphenyl als weitere Dihydroxykomponenten Phenole der Formel (II)

$$HO\text{-}Ar\text{-}OH \qquad (II),$$

in welcher

Ar für $C_6$-$C_{30}$ Aryl steht,

verwendet werden.

Als Comonomere für die Herstellung der erfindungsgemäßen Polyethersulfone sind als aromatische Dihydroxyverbindungen z.B. geeignet: einkernige divalente Phenole, wie beispielsweise Hydrochinon, mehrkernige Dihydroxyverbindungen, wie beispielsweise 4,4′-Dihydroxydiphenyl, Bisphenole, wie beispielsweise 2,2-Bis-(4-hydroxyphenyl)propan, Bis-(4-hydroxyphenyl)methan, 4,4′-Dihydroxybenzophenon, 4,4′-Dihydroxydiphenylether, 4,4′-Dihydroxydiphenylsulfid, 1,4-Bis-(4-hydroxydiphenyl)ether, 4,4′-Dihydroxydiphenylsulfid, 1,4-Bis-(4-hydroxybenzoyl)benzol, 1,3-Bis-(4-hydroxybenzoyl)benzol u.s.w., sowie deren kernsubstituierte (z.B. mit $C_1$-$C_4$-Alkyl) Derivate. Diese Verbindungen können allein oder als Gemisch eingesetzt werden.

Bevorzugt eingesetzte Comonomere der Formel (II) sind 2,2-Bis-(4-hydroxyphenyl)propan, 4,4′-Dihydroxydiphenyl, 4,4′-Dihydroxydephenylether, Hydrochinon, 4,4′-Dihydroxydiphenylsulfon und 4,4′-Dihydroxybenzophenon.

Als aromatische Dihalogen-Sulfonverbindungen werden solche der Formel (III)

X-Ar[1]-X (III),

in welcher

$Ar^1$ einen aromatischen $C_6$-$C_{30}$-Rest bedeutet, welcher mindestens eine Sulfon-Gruppe enthält,

X ein Halogenatom (F, Cl, Br) bedeutet, das in ortho- oder para-Position an den jeweils letzten aromatischen Kern angebunden ist,

eingesetzt.

Bevorzugte aromatische Dihalogen-Sulfonverbindungen entsprechen den Formeln (IV), (V) oder (VI)

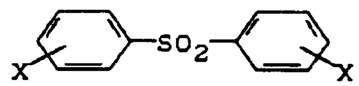

(IV),

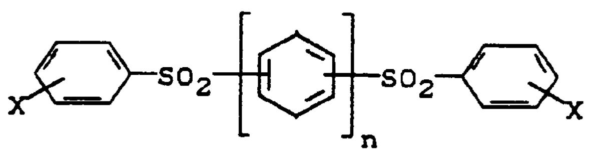

(V),

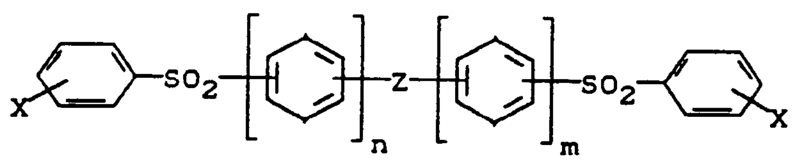

(VI),

in welchen

X Halogen (F, Cl, Br) bedeutet, das in ortho- oder para-Stellung an den jeweils letzten aromatischen Kern angebunden ist,

Z für einen divalenten aliphatischen Rest mit 1 bis 10 C-Atomen, einen divalenten aromatischen Rest mit 6 - 18 C-Atomen, eine Ether-Gruppe, eine Thioether-Gruppe, eine Carbonyl-Gruppe oder eine Sulfon-Gruppe bedeutet und

m und n für die Zahl 1, 2 und 3 stehen.

Die Halogenatome in der Dihalogen-Sulfonverbindung der Formeln (IV, V, VI) sind vorzugsweise Chlor und Fluor, besonders bevorzugt Chlor.

Für die Umsetzung geeignete, aromatische Dihalogen-Sulfonverbindungen sind bekannt, beispielsweise 4,4′-Difluordiphenylsulfon, 2,4′-Difluordiphenylsulfon, 4,4′-Dichlordiphenylsulfon, 2,4′-Dichlordiphenylsulfon, Bis-1,4-(4′fluor-1′-sulfonylphenylen) benzol, Bis-1,4-(4′-chlor-1′-sulfonylphenylen)benzol, Bis-1,3-(4′-chlor-1′-sulfonylphenylen)benzol, Bis-4,4′-(4″-fluor-1″-sulfonylphenylen)diphenylether, Bis-4,4′-(4″-chlor-1″-sulfonylphenylen)diphenylether u.s.w.. Sie können allein oder als Gemisch eingesetzt werden.

Die Dihalogen-Sulfonverbindungen der Formel (IV) haben bevorzugt ein Halogenatom in para-Position am jeweilig letzten aromatischen Kern.

Besonders bevorzugtes aromatisches Dihalogen-Sulfon ist 4,4′-Dichlordiphenylsulfon.

Die Herstellung der erfindungsgemäßen Polyethersulfone wird bevorzugt in einem inerten, polaren, organischen Lösemittel, vorzugsweise in einem N-alkylierten Caprolactam der Formel (VII)

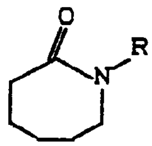

(VII),

in welcher

R für $C_1$-$C_5$-Alkyl steht,

durchgeführt.

Ein bevorzugtes Lösemittel ist beispielsweise N-Methylcaprolactam, N-Ethylcaprolactam, N-n-Propylcaprolactam, N-Isopropylcaprolactam, besonders bevorzugt N-Methylcaprolactam.

Die Umsetzung des 2′,2″-Dihydroxy-m-quaterphenyls und gegebenenfalls einer weiteren aromatischen Dihydroxyverbindung mit einer aromatischen Dihalogen-Sulfonverbindung mit jeweils freien Hydroxylgruppen zu den neuen, aromatischen Polyethersulfonen erfolgt in Gegenwart einer Alkalimetallverbindung.

Werden erfindungsgemäß die Alkalimetallsalze der freien Hydroxylgruppen umgesetzt, so kann der Zusatz einer weiteren Alkalimetallverbindung unterbleiben.

Für die Umsetzung geeignete Alkalimetallverbindungen sind beispielsweise Hydroxide, Carbonate, Bicarbonate, Fluoride, Hydride, Alkoxide und Alkylate von Alkalimetallen (Na, K). Bevorzugte Alkalimetallverbindungen sind im Hinblick auf Polykondensationsgeschwindigkeit, Farbe der Produkte und deren Thermostabilität Carbonate und Bicarbonate von Alkalimetallen. Bevorzugtes Alkalimetall ist Kalium.

Die Umsetzung von 2′-2″-Dihydroxy-m-quaterphenyl und gegebenenfalls weiteren aromatischen Dihydroxyverbindungen der Formel (II) mit jeweils freien Hydroxylgruppen mit aromatischen Dihalogen-Sulfonverbindungen der Formel (III) zu aromatischen Polyethersulfonen wird durchgeführt, indem man die Reaktionskomponenten in Gegenwart der Alkalimetallverbindung in einem N-alkylierten Caprolactam löst, die Reaktionsmischung allmählich auf ca. 120° bis 150°C aufheizt, bei dieser Temperatur durch ein zugesetztes azeotropes Schleppmittel gebildetes Reaktionswasser entfernt, anschließend das azeotrope Schleppmittel durch Reaktionstemperaturerhöhung destillativ entfernt und auf Reaktionstemperaturen von 150°-400°C, gegebenenfalls unter Druck (bis zu 10 bar), aufheizt. Die neuen aromatischen Polyethersulfone entstehen nach dieser Verfahrensweise innerhalb von 0,1h-24h in hoher Ausbeute.

Für die Erzielung hoher Molekulargewichte werden etwa äquimolare Mengen der aromatischen Dihydroxyverbindungen mit aromatischen Dihalogen-Sulfonverbindungen umgesetzt.

Für ein gegebenenfalls gewünschtes niedrigeres Molekulargewicht kann es zweckmäßig sein, eine der Reaktionskomponenten im Überschuß einzusetzen.

Für die Umsetzung von freie Hydroxylgruppen tragenden aromatischen Dihydroxyverbindungen mit aromatischen Dihalogen-Sulfonverbindungen zu aromatischen Polyethersulfonen werden die Alkalimetallverbindungen etwa äquivalent zu den freien Hydroxylgruppen eingesetzt, bevorzugt werden pro Hydroxylgruppe 1,0 bis 1,2 Mol Alkaliverbindung eingesetzt.

Als azeotropes Schleppmittel können Verbindungen eingesetzt werden, die mit Wasser ein Azeotrop bilden und einen niedrigeren Siedepunkt besitzen als das eingesetzte Lösemittel, z.B. Benzol, Toluol und Xylol, bevorzugt Toluol.

Die Umsetzung von Alkalimetallsalzen der freien Hydroxylgruppen der aromatischen Dihydroxyverbindungen mit aromatischen Dihalogen-Sulfonverbindungen zu aromatischen Polyethersulfonen geschieht in analoger Weise wie die Umsetzung der Reaktionskomponenten mit freien Hydroxylgruppen, gegebenenfalls in Gegenwart einer zugesetzten Alkalimetallverbindung und eines azeotropen Schleppmittels.

Die neuen, aromatischen Polyethersulfone können nach dem erfindungsgemäßen Verfahren bei Reaktionstemperaturen von 100° bis 400° C innerhalb 0,1 h bis 24 h erhalten werden. Bevorzugte Reaktionstemperaturen sind 150° bis 280° C, bevorzugte Reaktionszeiten 0,5 h bis 4 h.

Die erfindungsgemäß hergestellten neuen aromatischen Polyethersulfone mit hohen Molekulargewichten haben eine relative Viskosität von 1,50 bis 3 (gemessen in Dichlormethan).

Die relative Viskosität wird nach der Formel

$$\eta_{rel} = \frac{\eta}{\eta_O}$$

berechnet, wobei $\eta_O$ die Viskosität des verwendeten Lösemittels, $\eta$ die Viskosität der Polymerlösung und $\eta_{rel}$ die relative Viskosität bedeuten.

Die erfindungsgemäßend, aromatischen Polyethersulfone können als Formkörper, Filme, Fasern oder Oberflächenbeschichtungen verwendet werden. Die können in Form von Blends mit anderen Polymeren und Fasern, Aramid-Fasern, Calciumcarbonat, Calciumsilicat usw. abgemischt werden.

Beispiel 1

In einen 3000 ml Dreihalsrundkolben, versehen mit einem Glasrührer und einem Wasserabscheider mit Rückflußkühler sowie einem Thermometer werden 1,0 Mol. 4,4′-Dichlordiphenylsulfon, 0,5 Mol. 2′,2″-Dihydroxy-m-quaterphenyl, 0,5 Mol. 2,2-Bis-(4-hydroxyphenyl)propan, 1200 Toluol und 1,2-Mol. $K_2CO_3$ vorgelegt. Die Reaktionsmischung wird unter Rühren aufgeheizt, bis bei einer Innentemperatur von max. 150° C das entstehende Reaktionswasser vollständig entfernt ist (nach ca. 3 Stunden). Nach Entfernen des Reaktionswassers wird auf ca. 230°C aufgeheizt, dabei das Toluol (Schleppmittel) destillativ entfernt und für ca. 90 Minuten weitergerührt.

Zur Koagulation des entstandenen Polymeren wird die noch heiße Reaktionsmischung in einer 10 %igen wässrigen Phosphorsäurelösung gefällt, anschließend das ausgefallene Polymer abfiltriert und mehrmals in Wasser aufgeschlämmt, bis es elektrolytfrei ist. Zur Entfernung eventuell vorhandener Restlösemittelmengen wird anschließend mit Methanol aufgekocht, abfiltriert und getrocknet. Die Ausbeute beträgt mehr als 93 % der Theorie.

Vom getrockneten Produkt wird in Dichlormethan in einer Konzentration von 1 g/100 ml die relative Viskosität bestimmt. Sie beträgt $\eta_{rel}$ = 1,585.

Mit Hilfe eines DSC-Meßgerätes der Firma Mettler vom Typ "Mettler TA 3000" wird die Lage des Glasübergangspunktes ermittelt. Er beträgt $T_g$ = 209° C.

Das durch Fällung erhaltene Polymerpulver ist farblos.

Der nach DIN 53735 T.1 = ISO-Norm 1133 = ASTM D 1238 erhaltene Melt-Flow-Index (MFI) betrug 5,6 bei 330°C.

Beispiel 2

Es wird entsprechend Beispiel 1 verfahren, als Dihydroxyverbindungen werden 0,5 Mol 2′-2″-Dihydroxy-m-quaterphenyl und 0,5 Hydrochinon eingesetzt. Es wird ein weißes Polymer erhalten, welches eine Glasübergangstemperatur von $T_g$ = 209°C zeigt, eine relative Viskosität von $\eta_{rel}$ = 1,633 und einen MFI-Wert von 1,1 bei 330°C besitzt.

Beispiel 3

Beispiel 1 wird wiederholt, als Dihydroxykomponenten werden 0,5 Mol. 2′2″-Dihydroxy-m-quaterphenyl und 0,5 Mol. 2,6-Dihydroxynaphthalin eingesetzt. Das erhaltene weiße Polymer besitzt eine relative Viskosität von $\eta_{rel}$ = 1,685 und eine Glasübergangstemperatur von $T_g$ = 214°C sowie einen MFI-Wert von 1,0 bei 330°C.

Beispiel 4

Beispiel 1 wird mit 0,5 Mol. 2′-2″-Dihydroxy-m-quaterphenyl und 0,5 Mol. 4,4′-Dihydroxydiphenylether als Dihydroxykomponenten wiederholt. Ein weißes Polymerpulver wird isoliert. Das erhaltene Polyethersulfon besitzt eine relative Viskosität von $\eta_{rel}$ = 1,766 und zeigt eine Glasübergangstemperatur von 195°C sowie eine MFI-Wert von 0,7 bei 330°C.

Vergleichsbeispiel A

In eine Apparatur gemäß Beispiel 1 werden 1,0 Mol. 4,4′-Dichlordiphenylsulfon, 1,0 Mol. 4,4′-Dihydroxydiphenyl, 1200 ml N-Methylcaprolactam, 360 ml Toluol und 1,2 Mol. $K_2CO_3$ vorgelegt. Die Reaktionsmischung wird unter Rühren aufgeheizt, bis bei Temperaturen von etwa 150°C das Reaktionswasser entfernt ist. Danach wird auf ca. 230°C aufgeheizt, dabei das Schleppmittel destillative entfernt und für ca. 2 Stunden weitergerührt.

Die Aufarbeitung erfolgt analog zu Beispiel 1.

Es wird ein in Dichlormethan unlösliches Polymer mit einer Glasübergangstemperatur von 230°C erhalten. Der MFI-Wert konnte nicht ermittelt werden, da die Schmelzenviskosität des Produktes bei 330°C so hoch war, daß kein Ausstoß erfolgte.

## Patentansprüche

1. Aromatische Polyethersulfone, erhältlich aus 1-100 Mol-% 3,3′-Diphenyl-4,4′-dihydroxydiphenyl der Formel

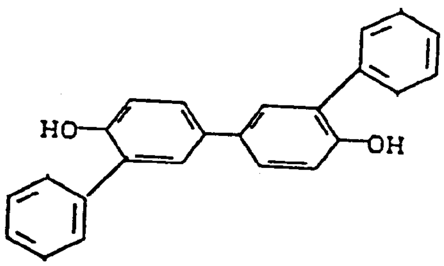

(I).

und gegebenenfalls ein oder mehreren weiteren aromatischen Dihydroxy-Komponenten und wenigstens einer aromatischen Dihalogenverbindung, welche eine Sulfon-Gruppe enthält, in Gegenwart einer Alkali-Verbindung, und eines N-Alkylierten Caprolactams als Lösemittel.

2. Aromatische Polyethersulfone gemäß Anspruch 1, welche eine relative Viskosität von 1.5-3 (in $CH_2$-$Cl_2$) aufweisen.

3. Verwendung von Polyethersulfonen nach Anspruch 1 zur Herstellung von geformten Körpern.

## Claims

1. Aromatic polyether sulphones obtainable from 1-100 mol-% of 3,3′-diphenyl-4,4′-dihydroxydiphenyl corresponding to the following formula

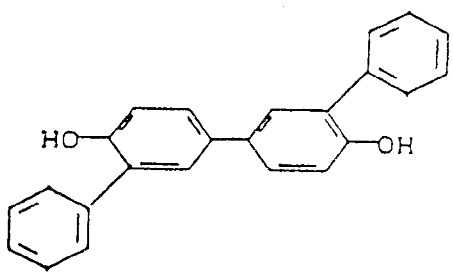

(I).

and optionally one or more further aromatic dihydroxy components and at least one aromatic dihalogen compound containing a sulphone group in the presence of an alkali metal compound and of an N-alkylated caprolactam as solvent.

2. Aromatic polyether sulphones according to Claim 1 having a relative viscosity of from 1.5 to 3 (in $CH_2Cl_2$),

3. The use of polyether sulphones according to Claim 1 for the preparation of moulded bodies.

## Revendications

1. Polyéthersulfones aromatiques, obtenues à partir de 1 à 100 moles % de 3,3’-diphényl-4-4’-dihydroxydiphényle de formule

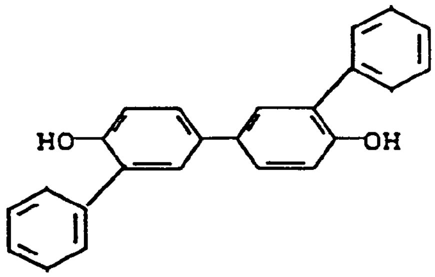

(I)

et, le cas échéant, d'un ou plusieurs autres composants dihydroxyliques aromatiques et d'au moins un composé aromatique dihalogéné, qui contient un groupe sulfone, en présence d'un composé alcalin et d'un caprolactame N-alkylé comme solvant.

2. Polyéthersulfones aromatiques suivant la revendication 1, qui présentent une viscosité relative de 1,5 à 3 (dans le $CH_2Cl_2$).

3. Utilisation de polyéthersulfones suivant la revendication 1 pour la production de corps façonnés.